(19) Europäisches Patentamt
European Patent Office
Office européen des brevets

(11) **EP 2 269 840 B1**

(12) **FASCICULE DE BREVET EUROPÉEN**

(45) Date de publication et mention
de la délivrance du brevet:
**23.07.2014 Bulletin 2014/30**

(51) Int Cl.:
***B60C 15/02*** *(2006.01)*     ***B60C 3/02*** *(2006.01)*

(21) Numéro de dépôt: **10006504.4**

(22) Date de dépôt: **23.06.2010**

(54) **Pneumatique pour cycle**

Pneumatischer Reifen für ein Rad

Pneumatic tire for a cycle

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **02.07.2009 FR 0903295**

(43) Date de publication de la demande:
**05.01.2011 Bulletin 2011/01**

(73) Titulaire: **MAVIC S.A.S.
74370 Metz-Tessy (FR)**

(72) Inventeurs:
• **Mercat, Jean-Pierre
74650 Chavanod (FR)**
• **Mouzin, Olivier
74210 Montmin (FR)**

(56) Documents cités:
**BE-A- 535 159         DE-C- 71 779
FR-A- 1 253 724       GB-A- 2 104 459
JP-A- 2005 059 751   US-A- 1 316 333
US-A- 2 963 326       US-A- 4 327 793**

## Description

La présente invention se rapporte à un pneumatique pour cycle et à une roue pour cycle comportant une jante et ledit pneumatique.

Les roues de cycles, sont en général constituées par une partie rigide, la jante, sur laquelle est montée une partie gonflable, le pneumatique. Deux types de pneumatique sont couramment utilisés pour les roues de vélo ; les boyaux et les pneus à tringle, ces derniers étant simplement appelés de façon courante, pneumatique ou pneus. L'invention se rapporte à ces deux types de pneumatique.

L'être humain est limité dans la puissance qu'il peut développer. La vitesse d'avance d'un cycliste est par conséquent limitée. Cette vitesse résulte d'un équilibre entre la puissance développée par le cycliste et les forces de résistance à l'avancement. Les forces de résistance comprennent notamment la résistance au roulement qui est une fonction linéaire de la vitesse et la résistance aérodynamique, la traînée, laquelle est fonction de la vitesse au carré.

La théorie de l'aérodynamique enseigne que plus l'écoulement de l'air, autour de l'objet en déplacement, est laminaire, plus la trainée sera faible. C'est pourquoi, on cherchera à éviter des géométries qui génèrent un décollement des filets d'air, ou en tout cas qui recule au maximum, les limites de décollement.

Dans le cas d'une roue de cycle, notamment d'une roue à rayon, du fait de son caractère annulaire et de ce que sa direction de progression dans l'air est incluse dans son plan de symétrie, la forme du pneu autant que celle de la jante sont déterminant pour la trainée aérodynamique de la roue. En effet, selon la direction de progression de la roue, en ce qui concerne l'avant de roue, le pneu constitue le bord d'attaque de la pénétration dans l'air, et le bord de fuite est sur la jante. En revanche, en ce qui concerne la partie arrière de la roue, le bord d'attaque est sur la jante, et le bord de fuite est sur le pneu.

Plusieurs fabricants ont proposé des modèles de roues qui revendiquent une diminution de la résistance aérodynamique. Par exemple, le document US 5061013 décrit une roue pour cycle dont le ratio entre la largeur maximale de la jante et la largeur du pneumatique est supérieur à 1. Un autre exemple est constitué par le document FR 2555106 qui décrit la mise en place d'un ruban de ceinturage sur un pneu de façon à centrer celui-ci sur la jante et réduire le coefficient de pénétration aérodynamique.

Toutes ces tentatives n'apportent pas de solution satisfaisante au problème de réduction de la résistance aérodynamique. Souvent, comme on le verra ci-dessous, la trainée aérodynamique est diminuée pour l'une des parties avant ou arrière de la roue, mais pas pour l'autre.

La jante décrite dans le document US 5061013 ne respecte pas la norme de l'ETRTO (European Tyre and Rim Technical Organisation). Notamment, cette norme préconise que pour une jante à boyau, le creux de jante ne doit pas dépasser 4,5 mm. Dans cette jante, le creux de jante est très important et cela aura nécessairement des conséquences soit sur le montage du pneu, soit sur le maintien de ce dernier sur la jante. En effet, dans le cas où le diamètre extérieur est celui d'une jante normalisé, le pneu pourra être facile à monter, mais du fait du creux important, une fois en place au fond de la jante, il sera monté lâche. Dans le cas où c'est le diamètre du fond de la jante qui correspond aux préconisations de l'ETRTO, il sera certainement très difficile, lors du montage, de faire passer le pneu par-dessus les talons de la jante. D'autre part, la roue obtenue sera peu confortable dans la mesure où, du fait du creux de jante important, la course de talonnage sera réduite. Une course de talonnage réduite multiplie les risques de crevaison par écrasement du pneu et pincement de la chambre à air. Pour diminuer ce risque, le concepteur de la roue décrite dans US 5061013 a privilégié d'avoir des bords supérieurs de jante épais et arrondis. L'épaisseur des bords supérieurs de jante a pour conséquence une rupture de continuité de la surface externe de la roue au niveau de l'interface pneu/jante. Cette rupture de continuité est source de perturbation dans l'écoulement de l'air et donc d'une augmentation de la résistance aérodynamique. Ce sera notamment le cas pour la portion arrière de la roue, c'est-à-dire lorsque le bord d'attaque sera la jante et le pneu, le bord de fuite. En effet, la largeur de la jante est beaucoup plus importante que celle du pneu, ce qui augmente la surface frontale.

Dans le document FR 2555106, on propose de réaliser un ruban de ceinturage pour améliorer la connexion des arêtes de la jante au pneu. Dans cette construction, le rétrécissement de la jante par rapport au pneu à pour conséquence que, en ce qui concerne la portion avant de la roue, la limite de décollement des filets d'air va se trouver entre la zone de plus grande largeur du pneu et la jante, induisant un écoulement perturbé le long des parois latérales de la jante. Le décrochage des filets d'air engendrera une forte dépression à proximité de la largeur maximale du pneu, ce qui entrainera une augmentation de la traînée aérodynamique. Dans la zone du ruban de ceinturage, les filets d'air seront déjà décollés, si bien que cette zone n'a aucun effet sur la diminution de la trainée. En effet, avec ou sans ruban de ceinturage, la roue décrite dans ce document, aura quasiment la même trainée aérodynamique. D'autre part, comme il est décrit dans ce document, le ruban de ceinturage comporte des cordons de lisières pour donner de la consistance à la matière élastique ou plastique qui assure le profil de raccordement Une telle construction est relativement lourde car elle revient, dans le cas d'un boyau, à équiper celui-ci d'un élément de renfort caractéristique des pneus à tringle, et dans le cas d'un pneu à tringle, à doubler cette structure de renfort. Par conséquent, même si il pouvait y avoir une amélioration de l'aérodynamisme, elle se ferait au détriment du poids de la roue.

Le document DE 71779 propose d'envelopper le pneu et la jante à l'aide d'une gaine se prolongeant jusqu'aux rayons.

L'objectif de la présente invention est de fournir un pneumatique et une roue de vélo ayant une faible résistance aérodynamique et ce, quel que soit l'angle d'incidence du vent apparent par rapport à la direction d'avancement du vélo et notamment lorsque l'angle d'incidence est compris entre 0° et 35°.

L'objectif de l'invention est également de fournir un pneumatique et une roue de vélo pour laquelle le risque de talonnage est diminué, c'est-à-dire que l'amplitude de déformation radiale du pneumatique jusqu'à ce que celui-ci soit complètement écrasé et que la jante vienne au contact avec le sol, soit maximale.

L'objectif de l'invention est également de fournir une roue de vélo légère.

L'objectif de l'invention est également de fournir une roue pour laquelle le montage du pneumatique, de type "boyau" ou de type "pneu à tringle" est aisé.

L'objectif de l'invention est également de fournir une roue de vélo qui satisfasse aux recommandations de l'ETRTO.

L'invention concerne un pneumatique pour cycle tel que défini dans la revendication 1. Une roue pour cycle comportant le pneumatique selon l'invention est définie dans la revendication 7.

D'autres caractéristiques et avantages de l'invention se dégageront de la lecture de la description qui va suivre en regard des dessins annexés qui ne sont donnés qu'à titre d'exemple non limitatif.

La figure 1 est une vue en perspective d'une roue selon un premier mode de réalisation de l'invention. La figure 2 est la section partielle de la roue de la figure 1.

La figure 3 est une section partielle d'une roue selon un deuxième mode de réalisation de l'invention.

La figure 4 est une vue en perspective partielle d'un des composant de la roue de la figure 3.

La figure 5 est une section partielle du pneumatique de la roue de la figure 3.

La figure 6 est une section partielle d'une roue selon un troisième mode de réalisation de l'invention.

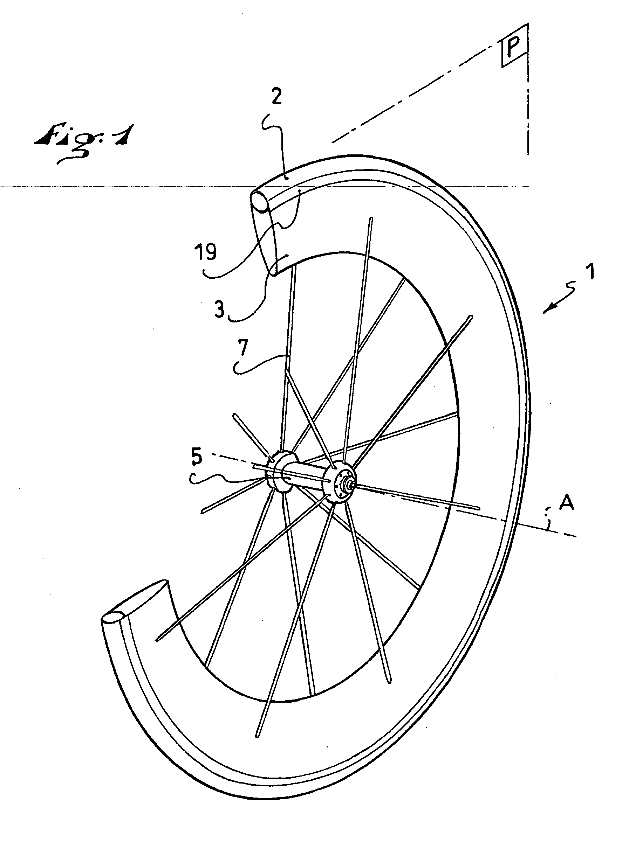

La figure 1 donne une vue d'ensemble d'une roue 1 selon l'invention. La roue 1 comprend une jante 3, un moyeu 5 et des rayons 7 reliant la jante au moyeu. La roue 1 dispose d'un axe A de révolution, autour duquel elle sera montée rotative sur le cadre de vélo, et un plan de symétrie P, perpendiculaire à l'axe A. Le diamètre total de la roue, D, c'est-à-dire le diamètre extérieur du pneumatique lorsque ce dernier est monté sur la jante et gonflé à la pression recommandée, est sensiblement compris entre 600 et 680. On appelle surface externe de la roue, l'ensemble des portions de tous les composants de la roue qui font face à l'extérieur de celle-ci et qui, par conséquent, sont au contact de l'écoulement d'air lors de son utilisation.

Bien qu'on représente ici une roue à rayon, il est entendu que l'invention ne se limite pas à ce type de roue. D'ailleurs, on ne détaillera pas, dans cette présentation, les types de rayons utilisés, ni leur fixation à la jante et au moyeu.

La jante 3 est réalisée par moulage d'un corps 40 en matériau composite, par exemple utilisant des fibres de carbone, ayant une forme annulaire.

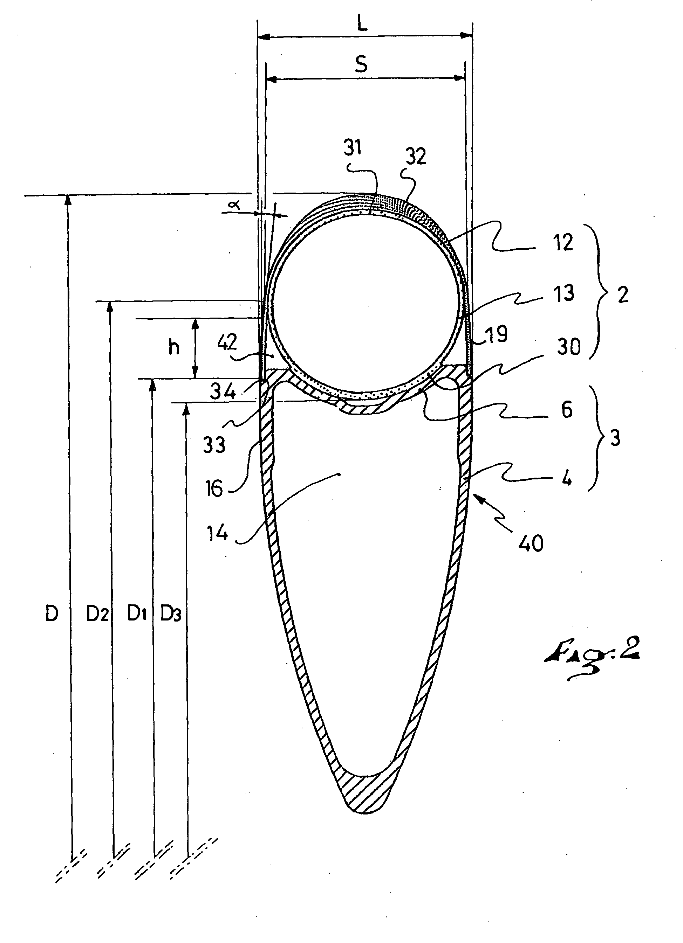

La figure 2 montre le profil partiel de la roue selon un premier mode de réalisation de l'invention. Il s'agit d'une roue de diamètre total D, compris entre 600 mm et 680 mm. La jante 3 comporte une partie principale 4 et une partie périphérique 6, prévue pour recevoir le pneumatique 2. La partie principale 4 et la partie périphérique 6 de la jante sont dans le cas d'espèce respectivement les parties basse et haute du corps 40. La partie périphérique 6 définie une cavité annulaire prévue pour recevoir le pneumatique.

La roue comprend un pneumatique 2 de type boyau. Le pneumatique repose sur le fond de la cavité annulaire. Le diamètre du fond de la cavité annulaire, est appelé le diamètre D3 de repos du pneumatique. Le diamètre D3 correspond également au diamètre intérieur du boyau lorsque celui-ci est monté sur la jante. Le pneumatique est fixé par collage sur la partie périphérique de la jante. La portion de pneumatique qui est collée sur la jante est appelée socle 30 du pneumatique Le pneumatique comprend une bande de roulement 12, susceptible de venir au contact du sol (route, piste). La bande de roulement 12 et le socle 30 sont séparés par des flancs 13. En section, la forme externe du pneumatique est sensiblement circulaire. A l'état gonflé, le pneumatique a une largeur, S, qui est égale 23 mm $\pm$ 0,5. Des pneumatiques ayant d'autres dimensions pourront être utilisés, notamment des pneumatiques dont la largeur est comprise entre 18 mm et 25 mm.

Le corps 40 comprend un caisson creux 14, dont la périphérie constitue la partie périphérique 6 de la jante 3. Le diamètre extérieur de la jante est celui d'une des valeurs préconisées par la norme ETRTO. Dans le cas d'espèce, ce diamètre est égal à 633 mm.

Les parois latérales 16 de la jante sont deux surfaces tronconiques placées de chaque coté, et qui fond avec le plan de symétrie, P, de la roue un angle relativement faible, par exemple 2°. Lorsque la roue sera montée sur un vélo et en phase de freinage, ces parois latérales seront en contact avec les patins de frein. Bien entendu, il s'agit là d'une caractéristique non limitative de l'invention, en effet on pourra envisager que ces surfaces latérales soient coplanaire du plan de symétrie ou encore que l'invention soit mise en oeuvre pour des roues à freinage à disque ne nécessitant pas une géométrie particulière des parois latérales de la jante.

Le pneumatique 2 comprend une carcasse 31, constituée de manière connue par un panneau dont les deux bords sont cousus entre eux, d'un ruban d'étanchéité collé sur la couture et placé au niveau du socle 30 du pneumatique et d'une chambre à air interne. Ces détails de construction ne sont pas représentés à la figure 2.

Le pneumatique comprend une bande de roulement 12 collée sur le sommet de la carcasse 31 dans la zone susceptible de venir au contact du sol. La bande de roulement est réalisée par une nappe 32 de dimensions supérieures à la bande de roulement et dont les bords ne sont pas collés à la carcasse 31. Les bords de la nappe 32 constituent, de chaque cotés, une lèvre 19 qui fait saillie depuis les flancs 13 du pneu, dans la partie haute de ces derniers.

La hauteur, h, de la lèvre 19, définie comme étant la longueur des bords de la nappe qui ne sont pas collés sur la carcasse 31 est supérieure à 15% de la valeur de la largeur S du pneu. Dans le cas d'espèce, cette hauteur h est égale à 7,7 mm.

La longueur de la lèvre est telle que le diamètre intérieur de celle-ci, le diamètre D1 est supérieur au diamètre de repos D3.

La largeur L de la partie périphérique de la jante est une valeur voisine de la largeur S du pneu dans une proportion comprise entre 85 % et 115 %. De préférence, pour diminuer au maximum la résistance aérodynamique, on choisira une jante dont la largeur est plus grande que la largeur du pneumatique dans une proportion comprise entre 101 % et 110 %.

L'extrémité libre 34 de la lèvre 19, c'est-à-dire l'extrémité basse de celle-ci, repose dans un logement 33 ménagé dans les talons 37. Les talons 37 de la jante sont les deux arêtes de chaque coté de la partie périphérique de la jante 3. On pourra prévoir de lier l'extrémité libre 34 de la lèvre 19 à la jante par un collage. Ces lèvres pourront être conçues afin d'être précontrainte sur le talon 37 de la jante lorsque le boyau sera gonflé.

Les lèvres 19 assurent une jonction "tendue" entre le pneu et la jante. En effet, la matière de la nappe 34 est choisie pour avoir une rigidité suffisante pour qu'une fois en place le rayon de courbure du profil en direction radial qu'elle défini est toujours supérieur à la largeur S du pneu.

Etant donné que les lèvres 19 font saillie du flanc 13 du pneu, à proximité de la bande de roulement 12, on peut dire que les lèvres 19 prolongent cette dernière depuis les zones de plus grande largeur du pneu, zones où celui-ci atteint la largeur S. Comme, d'autre part, la largeur S est voisine de la largeur de la jante, les lèvres 19, qui rejoignent des zones de largeurs voisines constituent des portions de la surface externe de la roue qui sont sensiblement coplanaire du plan de symétrie. Bien entendu, pour être précis, il faudrait parler de surface tronconique, mais ces surfaces ont des angles au sommet supérieurs 160°. Sur la figure 2, cela correspond à un angle $\alpha$ inférieur à 10°.

Lorsque le pneumatique est en place sur la jante, la lèvre 19 est décollée de la portion du pneumatique qui lui est sous-jacente de façon à définir un espace vide 42 entre la lèvre 19 et le reste du pneumatique. Grâce à cet espace vide 42, la lèvre 19 ne gène pas la déformation du pneumatique lorsque au passage d'un obstacle, celui-ci doit se comprimer localement.

En section, l'espace creux à la forme d'un triangle dont les trois cotés sont respectivement, la face supérieure de la jante, la face interne de la lèvre et la face de la portion du pneumatique qui est sous-jacente à la lèvre 19. Cette forme en triangle optimise le volume de l'espace vide 42 de façon à rendre le pneumatique le plus léger possible.

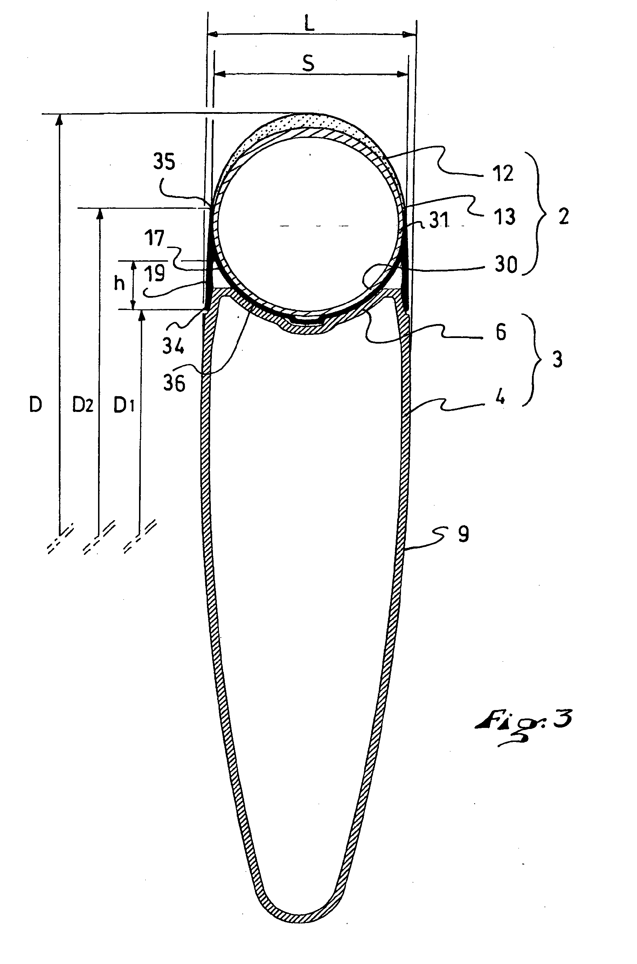

La figure 3 montre une section partielle d'un deuxième mode de réalisation de l'invention, dans lequel les lèvres 19 sont ménagées sur une pièce intermédiaire, qu'on appellera dans la suite de l'exposé, l'anneau 17.

Dans ce mode de réalisation, la jante est identique à celle décrite dans le précédent mode de réalisation et ne sera pas à nouveau détaillée.

Le pneumatique est quant à lui sensiblement différent. Il s'agit là encore d'un pneumatique de type boyau qui comprend une carcasse 31, une bande de roulement 12 et un anneau 17.

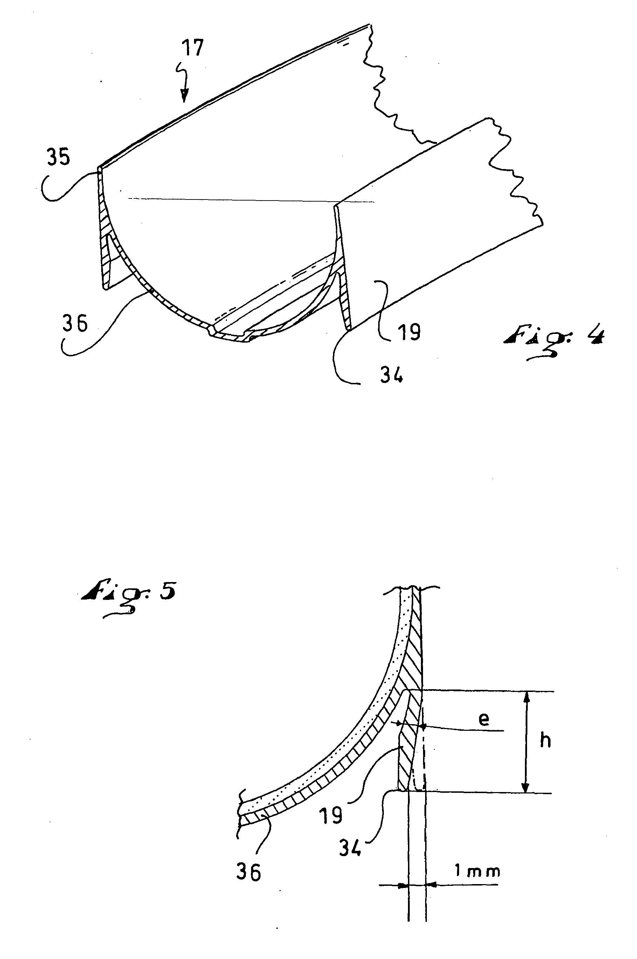

Comme on peut le voir à la figure 4, l'anneau 17 est une pièce de révolution, d'axe A. Il comprend une gouttière annulaire 36 ouverte vers sa périphérie. Lorsqu'il est assemblé à la carcasse 31, la gouttière 36 constitue le socle 30 et des flancs 13, ou du moins une grande proportion de ceux-ci, du pneu. Il est collé sur la carcasse 31, au moins au niveau du socle 30. De préférence, pour une meilleure solidarisation de l'anneau 17 avec le reste du pneumatique, on collera toute la superficie de la face intérieure de la gouttière avec le socle 30 et les parties basses des flancs 13.

De chaque coté, une lèvre 19 fait saillie depuis la gouttière 36 pour rejoindre, avec son extrémité libre 34, la jante 3.

Les lèvres constituent une portion annulaire flexible dont l'extrémité intérieure, c'est-à-dire l'extrémité libre 34, est apte à se déplacer suivant une direction sensiblement orientée selon l'axe A. La déformation par flexion est rendue possible notamment par le fait que la hauteur, h, de la lèvre est plus importante que son épaisseur e, notamment plus importante que 2 fois l'épaisseur, de préférence plus importante que 3 fois l'épaisseur e.

Cela étant dit, pour des raisons de légèreté de la roue on privilégiera une épaisseur pouvant atteindre la hauteur, h, divisée par 5.

La lèvre 19, dont la hauteur, h, se mesure depuis l'endroit où la lèvre se sépare de la gouttière 36 jusqu'à l'extrémité libre 34 est supérieure à 15 % de la valeur S et dans le cas d'espèce, mesure environ 6,4 mm. Dans les exemples représentés, l'épaisseur des lèvres est sensiblement constante sur toute sa hauteur, on pourrait, cependant, avoir une lèvre ayant une section s'amincissant depuis son ancrage sur les flancs jusque son extrémité libre. Pour disposer d'une valeur moyenne significative, on mesure l'épaisseur, e, au milieu de la lèvre 19. Dans le cas représenté, l'épaisseur, e, mesure environ 0,4 mm.

La figure 5 montre une vue de détail du pneu avant qu'il ne soit monté sur la jante. Grâce à la représentation, en traits pointillés, de la position que prendra la lèvre 19 après montage sur la jante, on comprend que, lorsque le pneu est monté sur la jante, les lèvres 19 sont précontraintes pour venir s'appuyer sur les talons de la jante de façon à s'assurer d'un contact entre lèvre et jantes. Dans le cas d'espèce, une précontrainte de 1 mm de l'extrémité libre 34 de la lèvre est prévue. La précontrainte des lèvres à un effet sur l'amélioration de l'aérodynamisme. En effet, s'il y avait décollement, des perturbations dans l'écoulement engendreraient une augmentation de la traînée.

L'anneau 17 est réalisé dans une matière plastique, par exemple dans un élastomère thermoplastique (TPE) ou dans un polyether bloc amide (PEBA) ayant un module d'élasticité inférieur à 1000 MPa. Des matières pouvant convenir pour la réalisation de l'anneau 17 incluent, de manière non limitative, Pebax, Hytrel, Keflex. La matière choisie, ainsi que la forme de l'anneau favorise sa déformation élastique. Le caractère déformable de l'anneau est utilisé, d'une part, lorsqu'on mettra en place le pneu sur la jante et, d'autre part, pour ne pas gêner la déformation du pneu au cours de l'utilisation de la roue. On notera que lors d'une très forte compression du pneu, dans laquelle la portion du pneu subissant le choc s'écrase et s'aplatit complètement pourrait générer une déformation importante de l'anneau 17, par exemple un écartement des lèvres 19, sans dommage irréversible de celui-ci.

L'anneau pourra éventuellement être réalisé en deux ou plusieurs matières, par exemple une matière pour la gouttière et une autre pour les lèvres.

Dans une roue selon l'invention, la surface externe, c'est-à-dire la surface de celle-ci qui est au contact de l'écoulement d'air, est constituée par la bande de roulement 12, la portion haute des flancs 13, les surfaces extérieures de l'anneau 17 et les parois extérieures de la partie principale 4 de la jante. L'anneau 17 qui constitue l'interface entre le pneu et la jante, représente une portion non négligeable de cette surface externe. En effet, radialement, l'anneau 17 s'étend depuis l'extrémité libre 34 de la lèvre 19, laquelle est située sur un cercle de diamètre D1, jusqu'à l'extrême périphérie 35 de la gouttière, située sur un cercle de diamètre D2. Le diamètre D1 correspond à une valeur légèrement inférieure au diamètre normalisé de la jante telle que le préconise L'ETRTO, tandis que le diamètre D2 est relativement important car il est supérieur au diamètre total de la roue, D, diminué des quatre tiers de la largeur du pneumatique, S: D2 > D - (4/3) × S.

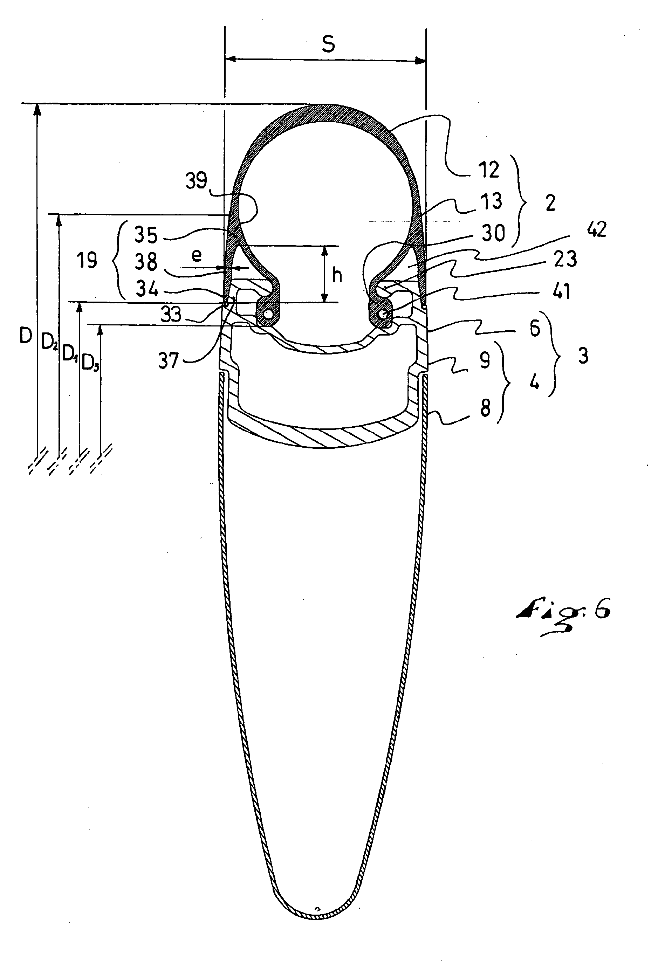

La figure 6 représente un troisième mode de réalisation de l'invention. Le pneumatique 2 est un pneumatique à tringle. Il comprend une bande de roulement 12 destinée à être en contact avec le sol, un socle 30, prévu pour assurer la fixation du pneu à la jante, et des flancs 13 reliant la bande de roulement 12 au socle 30.

A la différence des modes de réalisation précédents, le socle 30 est constitué ici par deux talons comprenant chacun une tringle de rigidification 41. Les talons, renforcés par les tringles sont retenus à la partie périphérique de la jante par des crochets 23.

Les deux talons reposent sur les sites de la jante. Le diamètre des sites est appelé, diamètre de repos, D3. Dans l'exemple décrit, le diamètre D3 vaut 622 mm. Le diamètre D3 est également l'un des chiffres qui, avec la largeur du pneu S, servent à identifier le pneumatique conformément à la norme ISO. Le diamètre de repos D3 est également appelé diamètre intérieur du pneumatique. Le diamètre intérieur de la lèvre, D1, est supérieur au diamètre de repos du pneumatique, D3. Ainsi, la lèvre ne gène pas pour le freinage, lorsque ce dernier est fait à l'aide de patins frottant sur la jante.

Le pneumatique pourra éventuellement être équipé d'une chambre à air indépendante (non représentée).

Conformément à l'invention, sur chacun des flancs du pneu, une lèvre 19 fait saillie en direction de l'axe A. La lèvre 19 est rattachée au pneumatique par sa zone d'ancrage 39 et se prolonge pour venir au contact du talon 37 de la jante par son extrémité libre 34. La hauteur, h, de la lèvre, définie entre la zone d'ancrage 39 et l'extrémité libre 34 est supérieure à 15 % de la largeur, S, du pneu, de préférence supérieure à 25 % de cette valeur. L'épaisseur, "e", de la lèvre mesurée dans la portion médiane 38 de celle-ci est inférieure à la moitié de la hauteur "h", de préférence inférieure au tiers de la hauteur "h".

Les lèvres 19 peuvent être constituées, comme dans le premier mode de réalisation, par le prolongement de la bande de roulement 12, ou bien d'une matière distincte de celle de la bande de roulement et fixée au reste du pneu au cours de la fabrication de ce dernier.

La géométrie des lèvres est calculée de telle façon qu'elles soient précontraintes pour venir se plaquer contre les talons de la jante. De préférence, pour assurer une meilleure continuité de la surface extérieure de la roue, l'extrémité libre 34 de la lèvre 19 est reçue dans un logement 33 ménagé dans le talon 37 de la jante.

La jante 3 comporte une partie principale 4 et une partie périphérique 6, prévue pour recevoir le pneumatique 2. La partie principale 4 de la jante est constituée par la partie basse d'un profilé aluminium 9 et par un flasque 8 en matériau composite collé sur la partie basse des parois latérales du profilé 9.

Comparé à une roue équipée d'un pneu à talon classique, le pneu selon l'invention comporte une garniture d'interface qui comble la zone d'interface pneu/jante. Cette garniture d'interface est constituée par la lèvre 19 depuis sa zone d'ancrage 39, jusqu'à son extrémité libre 34. La garniture d'interface représente une proportion non négligeable de la surface externe de la roue. En effet, elle constitue une superficie annulaire délimitée par un cercle de diamètre D1 (extrémité libre 34 de la lèvre 19) et par un cercle D2 (zone d'ancrage 39 de la lèvre). Le diamètre D1 correspond à une valeur légèrement inférieure à la valeur de diamètre normalisé de la jante selon l'ETRTO, tandis que le diamètre D2 est supérieur au diamètre total de la roue, D, diminué des quatre tiers de la largeur du pneumatique, S : D2 > D - (4/3) × S.

## Revendications

1. Pneumatique (2) pour cycle de forme sensiblement toroïdale dont la largeur S à l'état gonflé est comprise entre 18 et 25 mm, ledit pneumatique comportant une bande de roulement (12), destinée à être en contact avec le sol ; un socle (30), destiné à être fixé sur la partie périphérique (6) d'une jante de cycle (3) ; et deux flancs (13) reliant la bande de roulement (12) et le socle (30), une lèvre (19) faisant saillie depuis chacun des deux flancs (13), ladite lèvre (19) ayant une hauteur, h, supérieure à deux fois son épaisseur, e, et supérieure à 15% de la largeur S ; caractérisée en ce en ce que ladite lèvre (19) fait saillie depuis la partie haute du flanc, à proximité de la bande de roulement (12) et en ce que le diamètre intérieur D1 de ladite lèvre (19) est supérieur au diamètre intérieur D3 dudit pneumatique.

2. Pneumatique (2) selon la revendication 1, **caractérisé en ce que** les lèvres prolongent la bande de roulement depuis les zones de plus grande largeur du pneu.

3. Pneumatique (2) selon l'une des revendications 1 ou 2, **caractérisé en ce que** lesdites lèvres (19) sont constituées par le prolongement, non collé, de la bande de roulement (12).

4. Pneumatique (2) selon la revendication 3, **caractérisé en ce que** lesdites lèvres (19) et la bande de roulement (12) sont réalisées par une même nappe (32) de matière collée au sommet du pneumatique (2) et dont les bords sont laissés libres sur une hauteur supérieure à 15% de la valeur S.

5. Pneumatique (2) selon l'une des revendications 1 ou 2, **caractérisé en ce que** ladite lèvre (19) est ménagée sur une pièce intermédiaire collée sur les flancs (13) et/ou le socle (30) du pneumatique.

6. Pneumatique (2) selon la revendication 5, **caractérisé en ce que** ladite pièce intermédiaire est un anneau (17) comprenant une gouttière annulaire (36) ouverte vers sa périphérie et deux lèvres (19) faisant saillie depuis chacun des cotés de ladite gouttière (36).

7. Roue (1) pour cycle d'axe A et de diamètre D comportant une jante (3) et un pneumatique (2) selon l'une des revendications 1 à 6, ladite jante (3) étant constituée par un corps (40) de révolution dont la section comporte une partie principale (4) et une partie périphérique (6) qui est placée, radialement, à l'extérieur de ladite partie principale et qui comporte une cavité annulaire dans laquelle est reçu partiellement ledit pneumatique (2); la surface externe de ladite roue (1) étant constitué par les portions du pneumatique (2) et de la jante (3) qui font face à l'extérieur de la roue (1) ; la largeur de ladite partie principale L étant supérieure à la largeur S dudit pneumatique (2), lorsque ce dernier est à l'état gonflé; **caractérisée en ce qu'**un espace vide (42) est créé entre la face supérieure de la jante, la face interne de la lèvre (19) et la portion du pneumatique qui est sous-jacente à la lèvre (19).

8. Roue selon la revendication 7, **caractérisée en ce que** l'espace (42) a, en section, la forme d'un triangle dont les trois côtés sont respectivement, la face supérieure de la jante, la face interne de la lèvre (19) et la face de la portion du pneumatique qui est sous-jacente à la lèvre (19).

9. Roue selon l'une des revendications 7 ou 8, **caractérisée en ce que** ladite lèvre (19) constitue une portion intermédiaire de ladite surface externe de la roue (1) et **en ce que** ladite lèvre (19) s'étend sensiblement entre un cercle intérieur C1 d'axe A et de diamètre D1 et un cercle extérieur C2 d'axe A et de diamètre D2, ledit diamètre D2 étant supérieur à la valeur D diminuée des quatre tiers de la valeur de S :

$$D2 > D - (4/3) \times S$$

10. Roue (1) selon l'une des revendications 7 à 9, **caractérisée en ce que** le profil en section de ladite lèvre (19) est une portion de courbe dont le rayon de courbure est toujours supérieur à la valeur S.

## Patentansprüche

1. Luftreifen (2) für Fahrrad, der im Wesentlichen eine Toroidform hat, deren Breite S im aufgeblasenen Zustand im Bereich von 18 bis 25 mm liegt, wobei der Luftreifen eine Lauffläche (12), die für einen Kontakt mit dem Boden bestimmt ist; ein Bett (30), das dazu bestimmt ist, am Umfangsabschnitt (6) einer Fahrradfelge (3) befestigt zu werden; und zwei Seitenflächen (13), die die Lauffläche (12) und das Bett (30) verbinden, umfasst, wobei von jeder der zwei Seitenflächen (13) eine Lippe (19) vorsteht, wobei die Lippe (19) eine Höhe h besitzt, die größer als die doppelte Dicke e ist und größer als 15 % der Breite S ist;
**dadurch gekennzeichnet, dass** die Lippe (19) von dem oberen Teil der Seitenfläche in die Nähe der Lauffläche (12) vorsteht und dass der Innendurchmesser D1 der Lippe (19) größer ist als der Innendurchmesser D3 des Luftreifens.

**2.** Luftreifen (2) nach Anspruch 1, **dadurch gekennzeichnet, dass** die Lippen die Lauffläche ab den Zonen mit größter Breite des Reifens verlängern.

**3.** Luftreifen (2) nach einem der Ansprüche 1 oder 2, **dadurch gekennzeichnet, dass** die Lippen (19) durch die nicht verklebte Verlängerung der Lauffläche (12) gebildet sind.

**4.** Luftreifen (2) nach Anspruch 3, **dadurch gekennzeichnet, dass** die Lippen (19) und die Lauffläche (12) durch denselben Mantel (32) aus geklebtem Material am Scheitel des Luftreifens (2) verwirklicht sind, dessen Ränder über eine Höhe von mehr als 15 % des Wertes S freigelassen sind.

**5.** Luftreifen (2) nach einem der Ansprüche 1 oder 2, **dadurch gekennzeichnet, dass** die Lippe (19) an einem an die Seitenflächen (13) und/oder das Bett (30) des Luftreifens geklebten Zwischenteil ausgebildet ist.

**6.** Luftreifen (2) nach Anspruch 5, **dadurch gekennzeichnet, dass** das Zwischenteil ein Ring (17) ist, der eine ringförmige Rille (36) aufweist, die zu ihrem Umfang offen ist, und zwei Lippen (19) aufweist, die von jeder der Seiten der Rille (36) vorstehen.

**7.** Rad (1) für Fahrrad mit Achse (A) und Durchmesser (D), das eine Felge (3) und einen Luftreifen (2) nach einem der Ansprüche 1 bis 6 umfasst, wobei die Felge (3) aus einem rotationssymmetrischen Körper (40) gebildet ist, dessen Querschnitt einen Hauptabschnitt (4) und einen Umfangsabschnitt (6), der radial außerhalb des Hauptabschnitts angeordnet ist und einen ringförmigen Hohlraum aufweist, in dem der Luftreifen (2) teilweise aufgenommen ist, umfasst, wobei die äußere Oberfläche des Rades (1) durch die Abschnitte des Luftreifens (2) und die Felge (3) gebildet ist, die der Außenseite des Rades (1) zugewandt sind; wobei die Breite des Hauptabschnitts (L) größer ist als die Breite S des Luftreifens (2), wenn dieser Letztere im aufgeblasenen Zustand ist, **dadurch gekennzeichnet, dass** zwischen der äußeren Fläche der Felge, der inneren Fläche der Lippe (19) und dem Abschnitt des Luftreifens, der zu der Lippe (19) benachbart ist, ein leerer Raum (42) erzeugt wird.

**8.** Rad nach Anspruch 7, **dadurch gekennzeichnet, dass** der Raum (42) im Querschnitt die Form eines Dreiecks hat, dessen drei Seiten die obere Fläche der Felge bzw. die innere Fläche der Lippe (19) bzw. die Fläche des Abschnitts des Luftreifens, der zu der Lippe (19) benachbart ist, sind.

**9.** Rad nach einem der Ansprüche 7 oder 8, **dadurch gekennzeichnet, dass** die Lippe (19) einen Zwischenabschnitt der äußeren Oberfläche des Rades (1) bildet und dass sich die Lippe (19) im Wesentlichen zwischen einem Innenkreis C1 mit Achse A und Durchmesser D1 und einem Außenkreis C2 mit Achse A und Durchmesser D2 erstreckt, wobei der Durchmesser D2 größer ist als der Wert D, verringert um vier Drittel des Wertes S:

$$D2 > D - (4/3) \times S.$$

**10.** Rad (1) nach einem der Ansprüche 7 bis 9, **dadurch gekennzeichnet, dass** das Querschnittsprofil der Lippe (19) ein Krümmungsabschnitt ist, dessen Krümmungsradius stets größer ist als der Wert S.

**Claims**

**1.** Bicycle tyre (2) of substantially toroidal shape, of which the width S in the inflated state is comprised between 18 and 25 mm, the said tyre comprising a tread (12) intended to be in contact with the ground; a base (30) intended to be fixed to the peripheral part (6) of a bicycle rim (3); and two side walls (13) connecting the tread (12) and the base (30), a lip (19) projecting from each of the two side walls (13), the said lip (19) having a height h greater than twice its thickness e and greater than 15% of the width S; **characterized in that** the said lip (19) projects from the top of the side wall, near the tread (12), and **in that** the inside diameter D1 of the said lip (19) is greater than the inside diameter D3 of the said tyre.

**2.** Tyre (2) according to Claim 1, **characterized in that** the lips extend the tread from the regions of greatest width of the tyre.

**3.** Tyre (2) according to one of Claims 1 and 2, **characterized in that** the said lips (19) consist of the non-bonded extension of the tread (12).

**4.** Tyre (2) according to Claim 3, **characterized in that** the said lips (19) and the tread (12) are made of the same ply (32) of material bonded to the crown of the tyre (2) and the edges of which are left free over a height in excess of 15% of the value S.

**5.** Tyre (5) according to one of Claims 1 and 2, **characterized in that** the said lip (19) is formed on an intermediate component bonded to the side walls (13) and/or the base (30) of the tyre.

6. Tyre (2) according to Claim 5, **characterized in that** the said intermediate component is an annulus (17) comprising an annular channel (36) open towards its periphery and two lips (19) projecting from each of the sides of the said channel (36).

7. Bicycle wheel (1) of axis A and diameter D comprising a rim (3) and a tyre (2) according to one of Claims 1 to 6, the said rim (3) consisting of a body (40) of revolution the cross section of which has a main part (4) and a peripheral part (6) which is positioned, radially, on the outside of the said main part and which comprises an annular cavity in which the said tyre (2) is partially housed; the external surface of the said wheel (1) consisting of the portions of the tyre (2) and of the rim (3) which face towards the outside of the wheel (1); the width of the said main part L being greater than the width S of the said tyre (2), when the latter is inflated; **characterized in that** an empty space (42) is created between the upper face of the rim, the internal face of the lip (19) and the portion of the tyre underlying the lip (19).

8. Wheel according to Claim 7, **characterized in that** the space (42) has, in cross section, the shape of a triangle the three sides of which are, respectively, the upper face of the rim, the internal face of the lip (19) and the face of the portion of the tyre that underlies the lip (19).

9. Wheel according to one of Claims 7 and 8, **characterized in that** the said lip (19) constitutes an intermediate portion of the said external surface of the wheel (1), and **in that** the said lip (19) extends substantially between an inner circle C1 of axis A and diameter D1 and an outer circle C2 of axis A and diameter D2, the said diameter D2 being greater than the value D decreased by four thirds of the value of S:

$$D2 > D - (4/3) \times S$$

10. Wheel (1) according to one of Claims 7 to 9, **characterized in that** the cross-sectional profile of the said lip (19) is a portion of a curve the radius of curvature of which is always greater than the value S.

Fig. 1

Fig. 2

*Fig. 3*

17

35

36

19

34

*Fig. 4*

*Fig. 5*

36

19

34

e

h

1 mm

Fig. 6

**EP 2 269 840 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5061013 A
- FR 2555106

- DE 71779